# FASCICULE DE BREVET EUROPEEN

(11) **EP 0 883 496 B1**
(45) Date de publication et mention de la délivrance du brevet: **27.10.1999**
(21) Numéro de dépôt: 97907137.0
(22) Date de dépôt: 27.02.1997
(51) Int. Cl.: B41M 5/00, C08J 7/04, C09D 189/06

(54) **FILMS POUR IMPRESSION PAR JET D'ENCRE**
EMPFANGSSCHICHT FÜR TINTENSTRAHLDRUCK
INK-JET PRINTING FILMS

(30) Priorité: 29.02.1996 FR 9602787
(43) Date de publication de la demande: 16.12.1998
(73) Titulaire: TORAY PLASTICS EUROPE SA, 01701 Miribel (FR)
(72) Inventeur: DAL'MOLIN, Hervé, F-69360 Solaize (FR); MAITRE, Eric, F-69280 Marcy-l'Etoile (FR); VOVELLE, Louis, F-69004 Lyon (FR)
(74) Mandataire: Kügele, Bernhard
(86) Numéro de dépôt international: FR9700347
(87) Numéro de publication internationale: WO9731782

(56) Documents cités:
- EP-A- 0 177 111
- WO-A-94/02325
- WO-A-94/20303
- DE-A- 3 132 248

## Description

La présente invention concerne le domaine de l'impression par jet d'encre et plus spécifiquement les films pouvant être utilisés dans cette application.

L'accroissement très important de la communication d'informations a conduit à la multiplication des supports de toute nature. Parmi ceux-ci, les transparents à projeter ont particulièrement connu un grand développement.

Les transparents utilisés sur les imprimantes à jet d'encre sont constitués d'un film support polymérique, généralement d'un film en polyester, sur la surface duquel et déposée une couche d'enduction, destinée à recevoir l'impression par une encre.

Dans les brevets de l'art antérieur, le film support est relativement classique, mais des différences importantes sont observées en ce qui concerne la couche d'enduction.

Le brevet EP-A-0 232 040 décrit des films supports polymériques comportant une couche absorbant l'encre constituée de polymère ou copolymère d'acide acrylique ou méthacrylique avec un acrylate ou un méthacrylate d'alkyle.

Il s'avère selon le brevet EP-A-0 244 078 du même déposant que les couches en polymères d'acide acrylique et/ou méthacrylique présentent une adhésion insuffisante sur le film support polymérique, particulièrement sur les supports en polyester. Ce document propose de réaliser l'enduction à l'aide d'une composition de poly(alkylèneimine), d'un polyépoxyde et d'un halogénophénol comme décapant du film support.

Ces enductions sont mises en oeuvre sous forme de solutions organiques, notamment dans des alcools ou des cétones. L'utilisation de solutions aqueuses serait préférable.

Le document der brevet DE-A-3132248 décrit un film utilisable pour l'impression par jet d'encre, ledit film comprenant un film support en polyester comportant sur au moins l'une de ses faces une couche d'un revêtement destiné à recevoir l'impression, ledit revêtement comprenant une gélatine et un latex.

La demande de brevet WO 9420303 décrit des films pour jet d'encre comprenant un support et une couche destinée à recevoir l'encre contenant une gélatine ayant une masse moléculaire inférieure ou égale à 100 000 à raison de 30 % ou plus en poids de solide par rapport à la teneur totale en solide de la couche, de l'acide mucochlorique à raison de 0,1 % à 1 % en poids de solide par rapport à la gélatine et une carboxyméthylcellulose ayant une masse moléculaire inférieure ou égale à 100 000 et un degré d'éthérification de 1 % ou moins. L'adhésion de l'enduit sur un support en polytéréphtalate d'éthylène n'est pas très bonne.

Outre la nécessité d'avoir de bonnes propriétés d'adhésion entre la couche imprimable et le film support, y compris après l'impression, les critères essentiels auxquels doivent répondre les films pour impression à jet d'encre sont, d'une part de permettre un séchage rapide de l'encre lors de l'impression, par exemple un séchage après la sortie de l'imprimante qui soit de l'ordre de 1 à 5 minutes, et même de préférence de 1 à 2 minutes, pour une qualité d'impression standard, selon les imprimantes utilisées. Ce temps dépend notamment du type d'imprimante utilisé, de la couche d''encre à déposer, de la température ambiante.

Pour des raisons économiques, les films pour impression par jet d'encre ne doivent pas avoir une couche de revêtement trop épaisse, c'est-à-dire trop supérieure à une vingtaine de micromètres et, d'autre part, doivent permettre de donner une bonne définition de l'image reproduite.

En outre, il est bon que de tels films aient une résistance suffisante au vieillissement aux rayons UV et à l'humidité.

La présente invention répond à ces différentes conditions.

Elle consiste plus particulièrement en des films utilisables pour l'impression par jet d'encre comprenant un film support en polyester comportant sur au moins l'une de ses faces une couche d'un revêtement destiné à recevoir l'impression, caractérisés en ce que ledit revêtement comprend :
- un polyamine-polyacide de type gélatine
- un copolyester hydrodispersable à motifs sulfonyloxy et/ou un latex hydrosoluble ou alcalisoluble.

Les films de l'invention comportent une épaisseur de revêtement (ou enduit) de 1 à 20 micromètres.

La gélatine est une macromolécule polydispersée, constituée de plusieurs chaînes polypeptidiques libres ou associées entre elles. Sa masse moléculaire est répartie entre 10 000 et plusieurs centaines de mille, avec généralement une forte proportion de masse moléculaire vers 100 000. Cependant ces valeurs ne sont qu'indicatives, car la répartition moléculaire dépend des matières premières et des procédés d'extraction de la gélatine.

La gélatine est obtenue par extraction du collagène des animaux, essentiellement de la peau et des os.

Les copolyesters hydrodispersables à motifs sulfonyloxy présents avec la gélatine dans le revêtement destiné à recevoir l'impression sont des copolyesters dérivés d'au moins un acide aromatique dicarboxylique et d'au moins un diol aliphatique et comportant une pluralité de groupes sulfonyloxy de formule générale (I) :

-(-SO₃-)ₙM (I)

dans laquelle n est égal à 1 ou 2, M représente un atome d'hydrogène, un métal alcalin ou alcalino-terreux, un cation ammonium ou un cation ammonium quaternaire.

Par "copolyester hydrodispersable", on désigne dans la présente demande des copolyesters solubles dans l'eau ou des copolyesters formant des dispersions stables homogènes.

Les copolyesters hydrodispersables à groupes sulfonyloxy sont des produits connus, décrits notamment dans le brevet FR 1 602 002 et dans le brevet EP-A-0 540 374, auxquels on peut se référer pour plus de précisions sur leur préparation et leur composition. Ils sont obtenus par polycondensation d'un ou plusieurs acides aromatiques dicarboxyliques avec un ou plusieurs diols aliphatiques et au moins un composé difonctionnel comportant au moins un groupe sulfonyloxy de formule (I). Par commodité, dans la suite de l'exposé, l'expression "groupe sulfonyloxy" désignera aussi bien les groupes hydroxysulfonyle que les sels alcalins, alcalino-terreux ou d'ammonium qui en dérivent.

Parmi les acides aromatiques dicarboxyliques servant à préparer les copolyesters hydrodispersables, on peut citer à titre d'exemples les acides téréphtalique, isophtalique, orthophtalique, naphtalènedicarboxylique-1,4. Ces acides peuvent être utilisés seuls ou en mélanges. Parmi les acides précités, on met en oeuvre de préférence, pour la préparation des copolyesters hydrodispersables entrant dans la composition des films de l'invention, les acides téréphtalique et isophtalique seuls ou en mélanges entre-eux ou avec d'autres acides dicarboxyliques aromatiques. Les mélanges d'acide téréphtalique avec un ou plusieurs autres acides dicarboxyliques aromatiques et en particulier avec l'acide isophtalique conviennent tout particulièrement bien. Dans ce cas, la quantité d'acide téréphtalique exprimée en moles peut varier entre 20 et 99 % du nombre total de moles de diacides non sulfonés et de préférence entre 30 et 95 %.

Pour la préparation des copolyesters hydrodispersables, des acides dicarboxyliques aliphatiques comportant de 3 à 15 atomes de carbone peuvent être associés aux diacides aromatiques. Plus particulièrement, tout ou partie de l'acide dicarboxylique aromatique utilisé avec l'acide téréphtalique, tel que l'acide isophtalique, peut être remplacé par un ou plusieurs acides aliphatiques, tels que les acides adipique, glutarique, succinique, subérique, sébacique, dodécanoïque.

Comme exemples de diols entrant dans la composition des copolyesters hydrodispersables à groupes sulfonyloxy, on peut citer l'éthylèneglycol, le butanediol-1,4, le butanediol-1,5, le propanediol-1,3, le propanediol-1,2, le diméthyl-2,2 propanediol-1,3 (ou néopentylglycol), le pentanediol-1,5, l'hexanediol-1,6, le diéthylèneglycol, le triéthylèneglycol, le tétraéthylèneglycol, le cyclohexanediméthanol. L'éthylèneglycol et ses oligomères conviennent tout particulièrement bien. Ils peuvent être présents seuls ou en mélange entre-eux et/ou avec d'autres diols. La présence dans les copolyesters hydrodispersables de motifs provenant de l'éthylèneglycol et de ses oligomères est préférée.

Les groupes sulfonyloxy des copolyesters hydrodispersables sont introduits par l'intermédiaire d'un composé difonctionnel à groupe sulfonyloxy, susceptible de réagir avec les diols au cours de la polycondensation. Des exemples de tels composés sont cités dans le brevet EP-A-0 540 374. De préférence les motifs sulfonyloxy proviennent de sels de métaux alcalins d'acides aromatiques dicarboxyliques, tels que les acides sulfotéréphtaliques, sulfoisophtaliques, sulfophtaliques, sulfo-4 naphtalènedicarboxylique-2,7, sulfo-bis(hydroxycarbonyl)-4,4' diphénylsulfones, sulfodiphényldicarboxyliques, sulfo-bis(hydroxycarbonyl)4,4' diphénylméthane, sulfophénoxy-5 isophtaliques.

On préfère les copolyesters hydrodispersables comportant les motifs sodiooxysulfonyl-5 isophtalate.

Dans les copolyesters hydrodispersables, les motifs acides dicarboxyliques à motifs sulfonyloxy représentent de 5 à 30 moles pour 100 moles de motifs acides dicarboxyliques et de préférence de 8 à 15 moles pour 100 moles.

Les latex hydrosolubles et alcalisolubles, qui peuvent être utilisés pour réaliser le revêtement des films de l'invention, englobent également les latex qui ne sont pas totalement dissous dans l'eau ou dans une solution alcaline, mais qui gonflent suffisamment dans de tels milieux pour pouvoir être mis en oeuvre.

Les latex sont des dispersions aqueuses stables de particules de polymère. Parmi les polymères qui peuvent être mis sous forme de latex utilisables dans la présente invention, on peut citer à titre non limitatif, les polymères ou copolymères à base de styrène, d'acide acrylique, d'acide méthacrylique, d'acrylate d'alkyle, notamment d'éthyle ou de butyle, de méthacrylate d'alkyle, notamment d'éthyle ou de butyle. Afin qu'ils soient solubles dans les solutions alcalines ou dans l'eau, les latex comportent des groupes carboxyliques libres. En moles de fonctions carboxyliques libres par rapport à la totalité des monomères entrant dans la composition des latex, ces groupes carboxyliques représentent généralement au moins 1 % et de préférence au moins 2 %.

Les films de l'invention dont le revêtement comprend de la gélatine et un copolyester hydrodispersable à motifs sulfonyloxy sont préférés.

Dans le revêtement des films destiné à l'impression, la proportion pondérale calculée en solide sec entre la gélatine, d'une part, et le copolyester hydrodispersable et/ou le latex, d'autre part, peut varier dans de grandes limites. Cependant, de préférence le rapport pondéral gélatine/copolyester hydrodispersable et/ou latex se situe entre 40/60 et 98/2 et plus préférentiellement entre 50/50 et 95/5.

Le temps de séchage des encres lors de l'impression du revêtement des films de l'invention peut encore être réduit lorsque ledit revêtement comporte, en plus de la gélatine et du copolyester et'/ou du latex, au moins une charge.

Les charges qui peuvent être mises en oeuvre sont des solides minéraux ou organiques. A titre d'exemples non limitatifs de telles charges, on peut citer les argiles comme la bentonite, la sépiolite et l'actapulgite, les silicates d'aluminium (ou aluminosilicates), le talc, les talcs commerciaux qui sont essentiellement des mélanges de talc et de chlorite, les amidons, les silices, les micas, les particules de polymère tels que notamment le polystyrène, les polyamides. Les charges à structure lamellaire conviennent particulièrement bien.

Ces charges représentent de 0 % à 20 % en poids par rapport au poids sec de la gélatine et du copolyester et/ou du latex. De préférence, elles représentent de 0,5 % à 15 % du poids sec de la gélatine et du copolyester et/ou du latex.

Selon les applications visées des films de l'invention, on peut préférer parmi ces charges, celles qui permettent de conserver une transparence acceptable du film, notamment les argiles et les talcs, par exemple pour les transparents à projeter.

Mais l'invention n'est pas limitée à ce type d'utilisation et elle peut également porter sur des films mats.

Le film support en polyester peut être lui-même simple (A) ou composite (couche (A) et couche (B) ou couche (A) et couche (C) ou couche (A) comportant sur une face une couche (B) et sur l'autre face une couche (C)). Généralement l'épaisseur totale du film support varie de 20 µm à 200 µm et de préférence de 50 µm à 150 µm.

L'épaisseur du revêtement (ou enduit) est de préférence de 2 µm à 15 µm.

Les polyesters constituant les couches (A) et éventuellement (B) du film support peuvent être identiques ou différents, bien qu'il soit plus simple d'utiliser le même polyester pour les deux types de couches. A ce titre, on peut, pour la couche (A), faire appel aux polyesters utilisés habituellement pour obtenir des films semi-cristallins biorientés. Il s'agit de polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs, halogénures par exemple) et d'un ou plusieurs glycols aliphatiques. Comme exemple de diacides aromatiques, on peut citer les acides orthophtalique, téréphtalique, isophtalique, naphtalènedicarboxylique-2,5; naphtalènedicarboxylique-2,6. Ces acides peuvent être associés à une quantité mineure d'un ou plusieurs acides dicarboxyliques aliphatiques tels que les acides adipiques, azélaïque, hexahydrotéréphtalique. Comme exemples non limitatifs de diols aliphatiques, on peut citer l'éthylèneglycol ; le propanediol-1,3; le butanediol-1,4. Ces diols peuvent être associés à une quantité mineure d'un ou plusieurs diols aliphatiques plus condensés en carbone (néopentylglycol par exemple) ou cycloaliphatiques (cyclohexanediméthanol). Préférentiellement, les polyesters filmogènes cristallisables sont des polytéréphtalates ou des polynaphtalène dicarboxylates d'alkylènediols et, en particulier, le polytéréphtalate d'éthylèneglycol (PET) ou de butanediol-1,4 ou des copolyesters comportant au moins 80% en moles de motifs téréphtalate ou naphtalène-dicarboxylates d'alkylèneglycols. Avantageusement, le polyester est un polytéréphtalate d'éthylèneglycol dont l'indice de viscosité, mesuré dans un mélange 50/50 en poids de phénol et de dichloro-1,2 benzène selon la norme ISO 1628-5, est compris entre 55 ml/g et 75 ml/g.

Lorsque le film support ne comporte qu'une couche (A), celle-ci peut contenir des charges inertes destinées à lui conférer une rugosité de surface suffisante pour permettre au film de glisser sur lui-même ou sur un support tel que les différents rouleaux-guides lors des étirages. Ces charges sont connues. Ce sont généralement des charges minérales comme par exemple des silices, des alumines, des silicates, des mélanges silice/alumine, du dioxyde de titane, du dioxyde de zirconium, du carbonate de calcium, du sulfate de baryum. Ces charges peuvent également être constituées de particules de polymères.

Lorsque le film support est lui-même composite, la couche (A) est de préférence non chargée ou faiblement chargée, tandis que la couche (B) est chargée et confère à la face dorsale du film support, c'est-à-dire la face ne comportant pas le revêtement destiné à recevoir l'impression, la rugosité nécessaire. Dans cette variante de film support composite, la couche (B) chargée représente généralement entre 2 % et 10 % de l'épaisseur totale du film support, sans que ces valeurs soient critiques.

L'avantage d'avoir un film support composite dont une seule couche, la couche la moins épaisse, est chargée concerne bien évidemment la transparence du film de l'invention. De préférence, cette transparence est telle que le pourcentage de lumière dispersée par le passage d'un rayon lumineux à travers leur épaisseur, ou turbidité (haze), est inférieur ou égal à 10 %.

Le diamètre médian des charges est en général compris entre 0,5 µm et 15 µm et de préférence entre 1 µm et 10 µm.

La teneur en charge de la couche (A) unique ou de la couche (B) du film support est habituellement comprise entre 0,02 % et 1 % en poids par rapport au polyester. Cette teneur est choisie de façon à assurer au film support à la fois une turbidité inférieure ou égale à 10 % et de préférence inférieure ou égale à 7 %, et une rugosité suffisante, par exemple une rugosité totale Rₜ (mesurée selon la norme DIN 4768) au moins égale à 0,5 µm.

Les films décrits dans le brevet EP 0 260 258 peuvent très bien convenir comme films supports des films de l'invention.

Lorsque le film support est un film composite comportant une couche (C), celle-ci se trouve sur la face de la couche (A) comportant le revêtement destiné à recevoir l'impression. Cette couche (C) constitue un primaire d'adhérence et comprend de préférence un copolyester à groupes oxysulfonyles comportant une pluralité de motifs récurrents dérivés d'acides dicarboxyliques aromatiques, d'acides dicarboxyliques aromatiques à groupes oxysulfonyles, d'acides dicarboxyliques aliphatiques et de diols. Pour 100 moles de motifs d'acide dicarboxylique, le copolyester comporte de préférence de 78 à 93 moles de motifs téréphtalates, de 2 à 5 moles de motifs dérivés d'un diacide aromatique à groupe oxysulfonyle et de 5 à 17 moles de motifs dérivés d'au moins un acide alcanedicarboxylique ayant 4 à 15 atomes de carbone.

De préférence, le copolyester de la couche (C) du film support composite comporte une pluralité de motifs dérivés de l'acide téréphtalique, de l'acide hydroxysulfonyl-5 isophtalique et des sels de métaux alcalins, alcalino-terreux ou d'ammonium de la fonction acide sulfonique et de l'acide adipique.

Le copolyester de la couche (C) peut aussi être constitué par des motifs dérivés de l'acide téréphtalique et de l'acide isophtalique et de l'éthylèneglycol ou de motifs dérivés de l'acide téréphtalique et de l'éthylèneglycol et du cyclohexanediméthanol.

Lorsque le film support est un film composite comportant uniquement une couche (A) et une couche (C), cette dernière étant sur la face qui recevra l'impression, la couche (A) devant apporter une rugosité suffisante sera alors chargée.

Les films comportant une couche (C) sont plus particulièrement décrits dans le brevet FR-A-2 628 359.

Le film support est préparé de manière connue; il est notamment soumis à au moins un bi-étirage dans deux directions perpendiculaires. On peut, par exemple, procéder d'abord à un étirage dans la direction du déplacement du film (étirage longitudinal ou étirage machine), puis à un étirage dans une direction perpendiculaire (étirage transversal) ou inversement. Chacun des étirages peut être exécuté en plusieurs étapes. En général, l'étirage longitudinal est effectué à un taux de 3 à 5 (c'est-à-dire que la longueur du film étiré représente 3 à 5 fois la longueur du film amorphe non étiré) et à une température de 80°C à 135°C et l'étirage transversal est effectué à un taux de 3 à 5 et à une température de 90°C à 135°C, de préférence entre 100°C et 125°C.

L'étirage peut également être effectué simultanément dans les deux directions.

Après étirage, le film support est généralement soumis à un traitement thermique à une température comprise habituellement entre 160°C et 240°C.

La stabilisation du film support sert à éviter qu'il ait un retrait lors de l'impression dans les imprimantes ayant un dispositif thermique (barre à rayonnement infra-rouge) pour activer le séchage de l'encre. C'est notamment le cas sur les imprimantes à haute cadence. Cette stabilisation consiste en un traitement thermique, effectué soit en ligne lors de la préparation du film support, soit en reprise après l'enduction dudit film.

Lorsque le film support est un film composite, celui-ci est de préférence réalisé par coextrusion.

Les films de l'invention sont préparés par enduction d'une face ou des deux faces du film support à l'aide d'une solution ou dispersion aqueuse contenant la gélatine et le polyester hydrodispersable et/ou le latex hydrosoluble ou alcalisoluble.

Le plus souvent une seule face du film support est enduite.

L'enduction peut être effectuée en reprise, c'est-à-dire sur le film support déjà biétiré. Elle peut aussi être faite en ligne, sur le film support monoétiré.

La solution ou dispersion aqueuse comprend généralement de 1 à 50 % de gélatine et de 1 % à 50 % de polyester hydrodispersable et/ou de latex, les concentrations relatives étant choisies pour avoir le rapport pondéral gélatine/polyester hydrodispersable et/ou latex souhaité, dans les zones de valeurs indiquées précédemment. Elle comprend également le cas échéant une charge de la couche de revêtement, comme cela a été précisé précédemment.

La solution ou dispersion servant à préparer la couche de revêtement des films de l'invention, destinée à recevoir l'impression peut de préférence contenir divers autres adjuvants utiles. Parmi ces adjuvants, on peut citer les borates, notamment les borates de métaux alcalins tels que le tétraborate de sodium (borax), qui permettent d'améliorer l'adhésion de la couche de revêtement sur le film support. De préférence on utilisera de 0,05 à 30 % de borate en poids par rapport au poids de la gélatine et du copolyester hydrodispersable et/ou du latex.

Comme exemples d'autres adjuvants, on peut citer également les azurants et les colorants qui améliorent l'appréciation visuelle et le rendu des couleurs des films pour impression par jet d'encre de l'invention, les fongicides, les additifs rhéologiques tels que des sels destinés à diminuer la viscosité de la solution d'enduction, par exemple l'acétate de sodium.

Lors de la préparation de la solution ou dispersion aqueuse précédente, les composés peuvent être dissous ou dispersés simultanément dans l'eau ou l'on peut préparer une solution ou dispersion de l'un de ces composés, par exemple le polyester hydrodispersable et/ou le latex, puis dissoudre ou disperser l'autre composé, puis ajouter les charges éventuelles. Généralement il sera avantageux de réaliser la solution ou dispersion aqueuse en chauffant, par exemple entre 40°C et 95°C.

Le séchage du film après enduction est effectué à une température de 20°C à 150°C, pendant des durées très variables de quelques minutes à plusieurs heures, et généralement sous ventilation. De préférence, le séchage est effectué entre 60°C et 120°C pour des raisons économiques.

Les exemples qui suivent illustrent l'invention.

### EXEMPLES

### MODE OPERATOIRE TYPE

On dissout par chauffage à l'aide d'un bain-marie thermostaté à 60°C, 80 g de gélatine dans 1000 g d'eau distillée, contenant éventuellement du borax.

Le mélange est maintenu sous agitation à 60°C jusqu'à dissolution totale de la gélatine. On obtient une solution limpide légèrement jaunâtre.

On ajoute alors à cette solution, une solution aqueuse à 25 % en poids de copolyester sulfoné ou de latex, en quantité nécessaire pour avoir le rapport pondéral gélatine/copolyester sulfoné désiré.

On ajoute la charge, les éventuels autres adjuvants (azurant, colorant) et on agite à 1000 tours/minute à l'aide d'un barreau magnétique, tout en maintenant la température du mélange à 60°C, pendant 15 minutes.

On obtient ainsi une bonne dispersion des charges et adjuvants.

A l'aide de la solution préparée ci-avant (qui a une concentration totale en composés solides de 8 % à 16 % selon les essais), on réalise l'enduction d'un film de polytéréphtalate d'éthylène (PET) étiré biaxiallement, ayant une épaisseur de 100 micromètres (film support 1) ou d'autres films supports à base de PET, éventuellement multicouches.

L'enduction est réalisée à l'aide d'un dispositif manuel de dépose de type barre de Meyer.

Le film enduit est séché à température ambiante (20°C environ), à 60°C, 80°C, 100°C ou 120°C pendant quelques minutes.

L'impression du film ainsi préparé est effectuée à l'aide d'une imprimante jet d'encre couleur de marque déposée Hewlett Packard (modèle 660C).

Sur le film comportant l'impression, on réalise les mesures ou test qualitatifs suivants :
- temps de séchage de l'encre à la sortie de l'imprimante
- qualité de l'impression : sur une impression type présentant plusieurs couleurs/mélanges de couleurs et plusieurs intensités, à-plats, points, on observe et qualifie la netteté des contours, la présence éventuelle de bavure, le rendu des couleurs juste après l'impression ; d'une même façon, on observe et qualifie toute modification des teintes et des contours après que le transparent a séjourné pendant sept jours dans une boîte à lumière ou dans une enceinte climatique à 25°C et 85 % d'humidité relative; la qualité de l'impression est notée de la manière suivante :
   2 = excellent
   1 = bon
   0 = acceptable
   -1 = mauvais
- adhésion de l'enduit selon le test dit " au ruban adhésif" : mêmes notations 2, 1, 0 et -1 que précédemment : on colle le ruban adhésif (3M 396)sur le film enduit, puis on passe une roulette de 4 kg en faisant 5 allers et retours ; on arrache le ruban en tirant manuellement dans l'axe de la feuille ; on note la qualité de l'adhésion en considérant la quantité d'enduit arraché avec le ruban adhésif ;
- pégosité (test qualitatif au toucher) : mêmes notations 2, 1, 0 et -1 que précédemment.

Les exemples et essais comparatifs ont été réalisés selon le mode opératoire décrit ci-avant en mettant en oeuvre différents rapports pondéraux gélatine/copolyester sulfoné ou gélatine/latex, différents copolyesters sulfonés ou latex, différentes charges ou autres adjuvants.

Les quantités de gélatine, de copolyester et/ou de latex sont exprimées en pourcentage pondéral par rapport à l'ensemble gélatine/copolyester et/ou latex.

Les copolyesters et latex utilisés dans les exemples et essais comparatifs ont les caractéristiques suivantes :
- copolyester (1) (copol (1) dans les tableaux) : copolyester d'éthylène et de diéthylène, de masse moléculaire moyenne en nombre d'environ 33 000 et comportant des motifs téréphtalate et isophtalate à raison d'environ 80/20 en poids et 14 % en poids de motifs sodio-oxysulfonyl-5 isophtalate par rapport au poids total du copolyester
- copolyester (2) (copol (2) dans les tableaux) : copolyester d'éthylène et de diéthylène, de masse moléculaire moyenne en nombre d'environ 33 000 et comportant des motifs téréphtalate et isophtalate à raison d'environ 80/20 en poids et 16 % en poids de motifs sodio-oxysulfonyl-5 isophtalate par rapport au poids total du copolyester
- latex (1) : constitué en moles par environ 47 % de styrène, 49 % d'acrylate de butyle et 4 % d'acide carboxylique copolymérisés ayant un extrait sec de 50%, un pH de 6,5 et une dimension de particules de 120 nm (population monodisperse)
- latex (2) : constitué en moles par environ 67 % de styrène, 29 % de butadiène et 4 % d'acide carboxylique copolymérisés, ayant un extrait sec de 50 %, un pH de 4,4 et une dimension de particules de 180 nm (population monodisperse)
- latex (3) : constitué en moles par environ 55 % d'acrylate d'éthyle, 35 % d'acide méthacrylique et 10 % d'acrylate de butyle copolymérisés, ayant un extrait sec de 38,1 %, un pH de 3,2 et une densité optique (représentative des dimensions de particules) de 1355 cm³/g.

Les charges mises en oeuvre sont les suivantes :
- talc
- argile : mélange de sépiolite et de bentonite à environ 80 % de sépiolite.
- amidon de maïs
- mica
- silice
- aluminosilicate.

La quantité de charge est exprimée en poids par rapport au poids de l'enduit sec.

L'azurant/colorant utilisé dans l'exemple 28 est le bleu de méthylène (0,0010 % en poids du poids de l'enduit sec) et dans les exemples 29 et 30 le bleu Astrazon 3RL (0,0005 % et 0,0010 % en poids du poids de l'enduit sec).

Le film PET (film support 1) défini précédemment est utilisé dans tous les exemples et essais comparatifs sauf mention contraire. Les autres films supports utilisés ont également une épaisseur totale de 100 micromètres et ont les compositions suivantes :
- film support (2) : film coextrudé PET comportant une couche (C) de 1 micromètre constituée par un copolyester téréphtalate d'éthylène et téréphtalate de cyclohexanediméthanol (17 % en moles par rapport aux deux diols), sur laquelle est déposé l'enduit destiné à recevoir l'impression,
- film support (3) : film coextrudé PET comportant une couche (C) de 1 micromètre constituée par un copolyester téréphtalate d'éthylène (86,5 % en moles), adipate d'éthylène (10 % en moles) et sodio oxysulfonyl-5 isophtalate (3,5 % en moles), sur laquelle est déposé l'enduit destiné à recevoir l'impression,
- film support (4) : film coextrudé PET comportant une couche (C) de 1 micromètre constituée par un copolyester téréphtalate d'éthylène/isophtalate d'éthylène (40 % en moles d'acide isophtalique par rapport aux deux diacides), sur laquelle est déposé l'enduit destiné à recevoir l'impression.

Des films pour impression par jet d'encre largement répandus dans le commerce ont été testés (essais comparatifs 3 à 13) après impression dans les conditions suivantes en même temps que le film selon l'invention préparé dans l'exemple 12 :
- test de résistance à la lumière : éclairage normalisé D65 = 40 W et UV = 20 W dans une boîte à lumière entièrement obturée, ce qui a pour effet de faire monter la température à 35°C ; distance source de lumière-échantillon de film imprimé = 40 cm; durée du test = une semaine;
- test de résistance à l'humidité : les films imprimés sont mis dans une étuve climatique à 25°C, sous 85% d'humidité relative pendant une semaine.

Les contrôles effectués sont l'étalement des encres (épaississement en % des caractères calculé par comparaison de la taille de la lettre "e" avant et après le test) et le mélange des couleurs (par examen visuel), la densité des couleurs à l'aide d'un appareil de marque Davenport et la modification des couleurs à l'aide d'un spectrocolorimètre.

Ces films commerciaux ont été répertoriés FC1, FC2, FC3, FC4, FC5, FC6, FC7, FC8, FC9, FC10 et FC11.

Les résultats des contrôles d'étalement des encres et de mélange des couleurs sont indiqués dans le tableau 7. Ils montrent que les films selon l'invention ont des qualités au moins équivalentes aux meilleurs films commerciaux. Pour la variation de densité des couleurs et la modification des couleurs, les résultats sont sensiblement les mêmes pour les différents films commerciaux testés et pour le film de l'invention.

L'essai comparatif 14 a été effectué en réalisant sur le film support (1) un enduit à partir d'une solution aqueuse à 7 % en poids d'un mélange de 50 % en poids d'une gélatine ayant une masse moléculaire en poids de 70000 et d'une carboxyméthylcellulose ayant une masse moléculaire de 80000 et un degré d'éthérification de 0,8 %, la solution servant à faire l'enduit comportant également de l'acide mucochlorique à raison de 0,3 % en poids par rapport à la gélatine.

Les résultats obtenus avec le film selon l'essai comparatif 14 sont les suivants :
- qualité de l'impression : 1
- adhésion : -1
- pégosité : 1

Les tableaux 1 à 7 ci-après rassemblent les caractéristiques des différents exemples et essais comparatifs réalisés ainsi que les résultats des mesures et tests effectués. Une valeur de -1 (mauvais) à l'un des tests effectués signifie que le film est considéré comme mauvais, même si les autres tests sont bons.

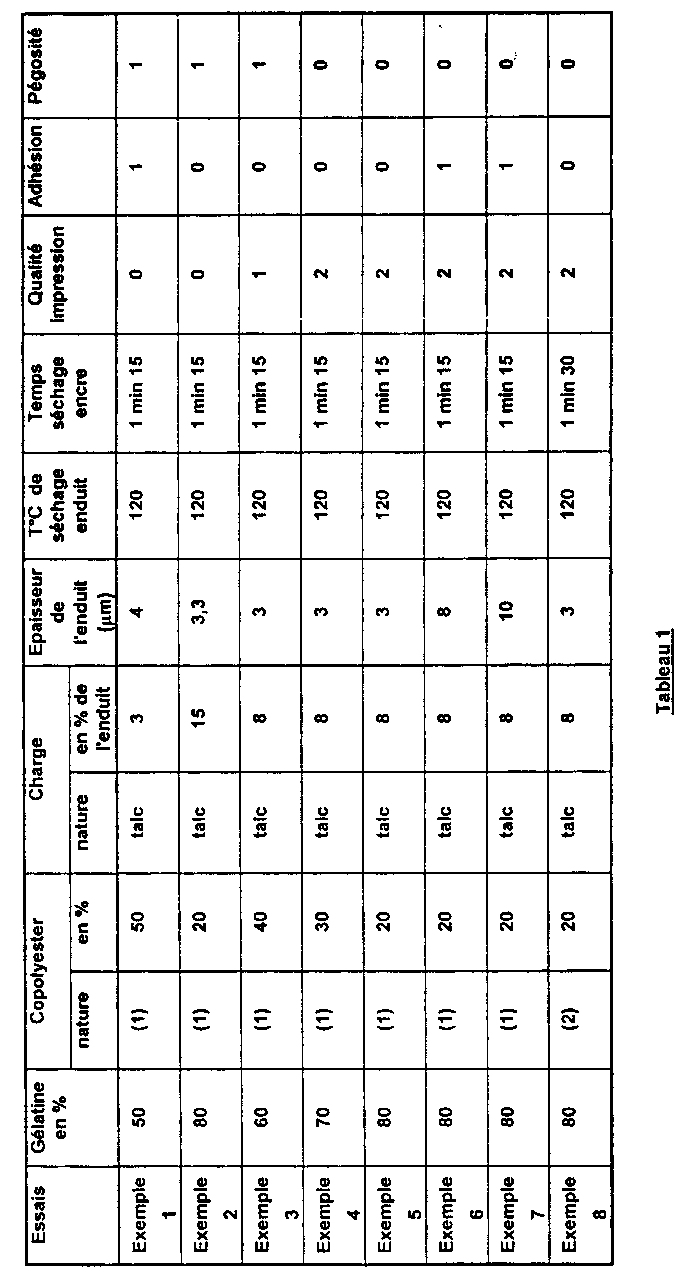

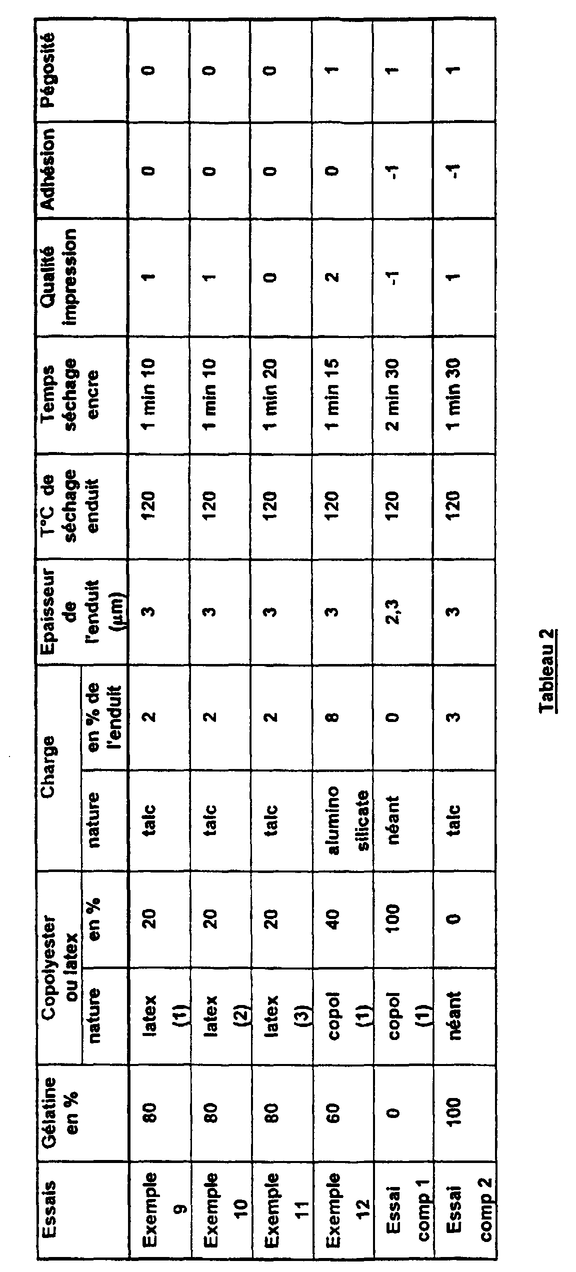

**Tableau 3**

| Essais | Gélatine en % | Copolyester | | Charge | | Epaisseur de l'enduit (µm) | T°C de séchage enduit | Temps séchage encre | Qualité impression |
|---|---|---|---|---|---|---|---|---|---|
| | | nature | en % | nature | en % de l'enduit | | | | |
| Exemple 13 | 80 | (1) | 20 | talc | 3 | 3 | 60 | 1 min 45 | 1 |
| Exemple 14 | 80 | (1) | 20 | talc | 3 | 3,5 | 60 | 1 min 30 | 1 |
| Exemple 15 | 80 | (1) | 20 | talc | 3 | 4,5 | 20 | 1 min 15 | 1 |
| Exemple 16 | 80 | (1) | 20 | talc | 3 | 4,5 | 60 | 1 min 15 | 1 |
| Exemple 17 | 80 | (1) | 20 | talc | 3 | 4,5 | 120 | 1 min 15 | 1 |

**Tableau 4**

| Essais | Gélatine en % | Copolyester | | Charge | | Epaisseur de l'enduit (µm) | T°C de séchage enduit | Temps séchage encre | Qualité Impression |
|---|---|---|---|---|---|---|---|---|---|
| | | nature | en % | nature | en % de l'enduit | | | | |
| Exemple 18 | 80 | (1) | 20 | silice 12 nm | 10 | 3 | 100 | 1 min 30 | 1 |
| Exemple 19 | 80 | (1) | 20 | silice 6 µm | 10 | 3 | 100 | 1 min 30 | 1 |
| Exemple 20 | 80 | (2) | 20 | argile | 10 | 3 | 120 | 1 min 15 | 1 |
| Exemple 21 | 80 | (2) | 20 | amidon de maïs | 6 | 3 | 120 | 1 min 45 | 1 |
| Exemple 22 | 80 | (2) | 20 | mica | 3 | 3 | 120 | 1 min | 1 |

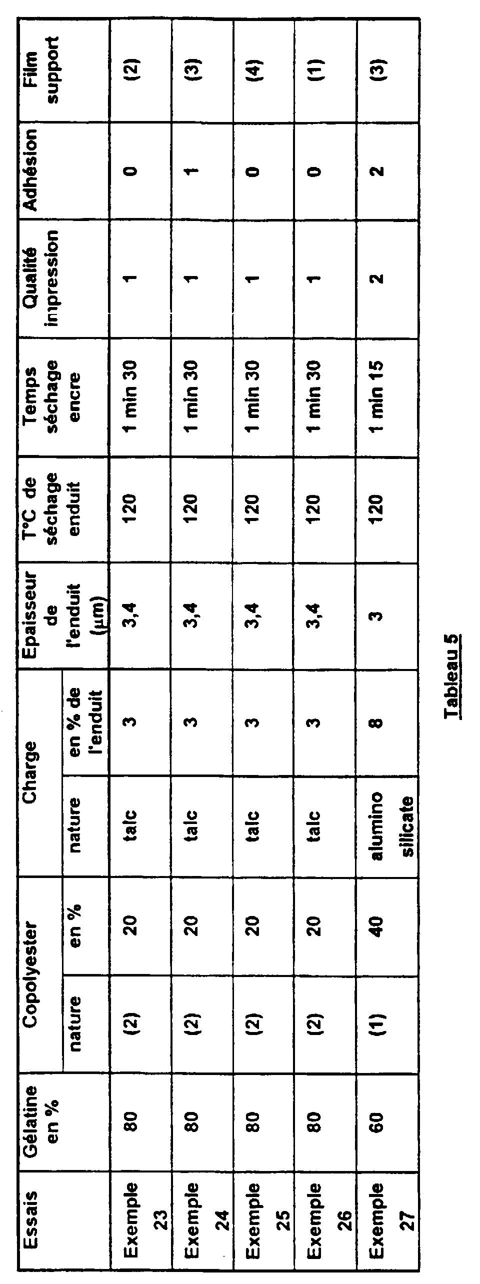

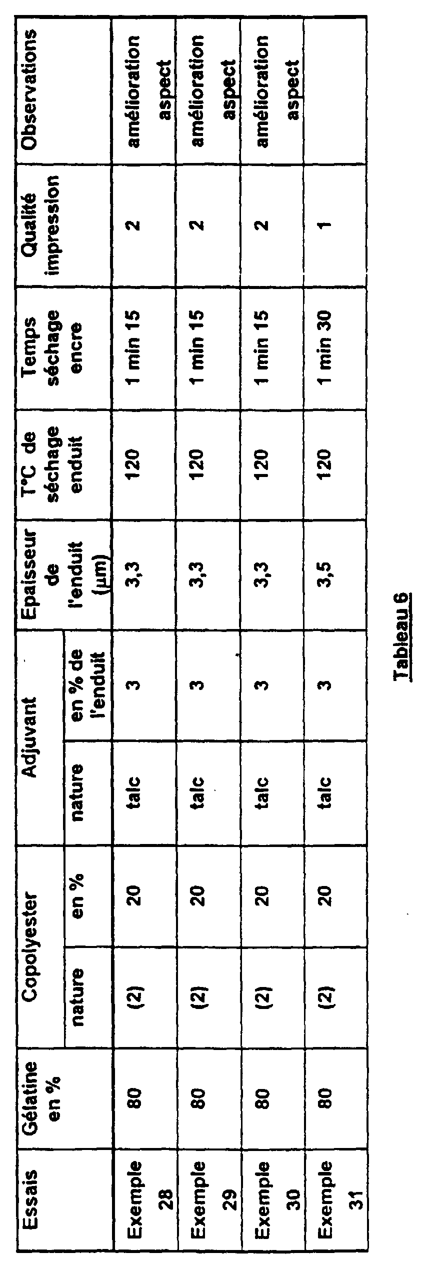

**Tableau 7**

| Essai | Film testé | Epaississement (%) | Mélange des couleurs |
|---|---|---|---|
| Essai comparatif 3 | FC1 | 75 | fort |
| Essai comparatif 4 | FC2 | 100 | fort |
| Essai comparatif 5 | FC3 | 22 | léger |
| Essai comparatif 6 | FC4 | 16 | moyen |
| Essai comparatif 7 | FC5 | 11 | léger |
| Essai comparatif 8 | FC6 | 11 | moyen |
| Essai comparatif 9 | FC7 | 33 | moyen |
| Essai comparatif 10 | FC8 | 11 | léger |
| Essai comparatif 11 | FC9 | 11 | moyen |
| Essai comparatif 12 | FC10 | 33 | fort |
| Essai comparatif 13 | FC11 | 0 | léger |
| Exemple 32 | Exemple 12 | 12 | léger |

## Revendications

1. Films utilisables pour l'impression par jet d'encre comprenant un film support en polyester comportant sur au moins l'une de ses faces une couche d'un revêtement destiné à recevoir l'impression, ledit revêtement comprenant une polyamine-polyacide de type gélatine caractérisés en ce que ledit revêtement comprend aussi:
- un copolyester hydrodispersable à motifs sulfonyloxy et/ou un latex hydrosoluble ou alcalisoluble.

2. Films selon la revendication 1, caractérisés en ce que le revêtement a une épaisseur de 1 à 20 micromètres.

3. Films selon l'une des revendications 1 ou 2, caractérisés en ce que le copolyester hydrodispersable à motifs sulfonyloxy présent avec la gélatine dans le revêtement destiné à recevoir l'impression est choisi parmi les copolyesters dérivés d'au moins un acide aromatique dicarboxylique et d'au moins un diol aliphatique et comportant une pluralité de groupes sulfonyloxy de formule générale (I) :
-(-SO₃-)ₙM (I)
dans laquelle n est égal à 1 ou 2, M représente un atome d'hydrogène, un métal alcalin ou alcalino-terreux, un cation ammonium ou un cation ammonium quaternaire.

4. Films selon l'une des revendications 1 ou 2, caractérisés en ce que le latex est choisi parmi les latex de polymères ou copolymères à base de styrène, d'acide acrylique, d'acide méthacrylique, d'acrylate d'alkyle, notamment d'éthyle ou de butyle, de méthacrylate d'alkyle, notamment d'éthyle ou de butyle.

5. Films selon l'une des revendications 1 à 3, caractérisés en ce que l'acide aromatique dicarboxylique, servant à préparer les copolyesters hydrodispersables entrant dans la composition du revêtement destiné à recevoir l'impression, est choisi parmi les acides téréphtalique, isophtalique, orthophtalique, naphtalènedicarboxylique-1,4 et leurs mélanges et de préférence parmi les mélanges d'acide téréphtalique avec un ou plusieurs autres acides dicarboxyliques aromatiques et plus préférentiellement avec l'acide isophtalique.

6. Films selon la revendication 5, caractérisés en ce que la quantité d'acide téréphtalique exprimée en moles varie entre 20 et 99 % du nombre total de moles de diacides non sulfonés et de préférence entre 30 et 95 % et en ce que le copolyester hydrodispersable entrant dans la composition du revêtement destiné à recevoir l'impression, comporte des motifs sodio-oxysulfonyl-5 isophtalate.

7. Films selon l'une des revendications 1 à 3, 5 et 6, caractérisés en ce que le diol entrant dans la composition des copolyesters hydrodispersables à groupes sulfonyloxy, est choisi parmi l'éthylèneglycol, le butanediol-1,4, le butanediol-1,5, le propanediol-1,3, le propanediol-1,2, le diméthyl-2,2 propanediol-1,3 (ou néopentylglycol), le pentanediol-1,5, l'hexanediol-1,6, le diéthylèneglycol, le triéthylèneglycol, le tétraéthylèneglycol, le cyclohexanediméthanol et de préférence parmi l'éthylèneglycol et ses oligomères.

8. Films selon l'une des revendications 1 à 7, caractérisés en ce que dans les copolyesters hydrodispersables, entrant dans la composition du revêtement destiné à recevoir l'impression, les motifs acides dicarboxyliques à motifs sulfonyloxy représentent de 5 à 30 moles pour 100 moles de motifs acides dicarboxyliques et de préférence de 8 à 15 moles pour 100 moles.

9. Films selon l'une des revendications 1 à 8, caractérisés en ce que dans le revêtement destiné à l'impression, la proportion pondérale calculée en solide sec entre la gélatine, d'une part, et le copolyester hydrodispersable et/ou le latex, d'autre part, se situe entre 40/60 et 98/2 et de préférence entre 50/50 et 95/5.

10. Films selon l'une des revendications 1 à 9, caractérisés en ce que le revêtement comporte, en plus de la gélatine et du copolyester et/ou du latex, au moins une charge choisie parmi les solides minéraux ou organiques.

11. Films selon l'une des revendications 1 à 10, caractérisés en ce que le revêtement comporte au moins une charge choisie parmi les argiles comme la bentonite, la sépiolite et l'actapulgite, les silicates d'aluminium, le talc, les talcs commerciaux qui sont essentiellement des mélanges de talc et de chlorite, les amidons, les silices, les micas, les billes de polymère tels que notamment le polystyrène, les polyamides.

12. Films selon l'une des revendications 1 à 11, caractérisés en ce que dans le revêtement la charge représente de 0 % à 20 % en poids par rapport au poids sec de la gélatine et du copolyester et/ou du latex et de préférence de 0,5 % à 15 %.

13. Films selon l'une des revendications 1 à 12, caractérisés en ce que le revêtement comporte, en plus de la gélatine et du copolyester et/ou du latex, d'autres adjuvants améliorant l'adhésion de la couche de revêtement sur le film support comme les borates, de préférence les borates de métaux alcalins tels que le tétraborate de sodium.

14. Films selon la revendication 13, caractérisé en ce que la couche de revêtement contient de 0,05 à 30 % de borate en poids par rapport au poids de la gélatine et du copolyester hydrodispersable et/ou du latex.

15. Films selon l'une des revendications 1 à 14, caractérisés en ce que le revêtement comporte, en plus de la gélatine et du copolyester et/ou du latex, d'autres adjuvants comme les azurants, les colorants, les fongicides, les additifs rhéologiques.

16. Films selon l'une des revendications 1 à 15, caractérisés en ce que le film support en polyester est lui-même simple (A) ou composite couche (A) et couche (B) ou couche (A) et couche (C) ou couche (A) comportant sur une face une couche (B) et sur l'autre face une couche (C) et que l'épaisseur totale dudit film support varie de 20 µm à 200 µm et de préférence de 50 µm à 150 µm.

17. Procédé de préparation de films selon l'une des revendications 1 à 16 caractérise en ce qu'il consiste en l'enduction d'une face ou des deux faces du film support à l'aide d'une solution ou dispersion aqueuse contenant la gélatine et le polyester hydrodispersable et/ou le latex hydrosoluble ou alcalisoluble et de préférence en l'enduction d'une seule face du film support.

18. Procédé selon la revendication 17, caractérisé en ce que l'enduction est effectuée en reprise sur le film support déjà biétiré ou en ligne sur le film support monoétiré.

19. Procédé selon l'une des revendications 17 ou 18, caractérisé en ce que la solution ou dispersion aqueuse comprend de 1 % à 50 % en poids de gélatine et de 1 % à 50 % en poids de polyester hydrodispersable ou de latex et le cas échéant une charge, un adjuvant d'adhésion, un azurant, un colorant, un fongicide, un additif rhéologique.

## Claims

1. Films which can be used for ink jet printing, including a polyester substrate film comprising on at least one of its faces a layer of a coating intended to receive the printing, said coating comprising a polyamine-polyacid of gelatine type, characterised in that said coating further includes :
- a water-dispersible copolyester containing sulphonyloxy units and/or a water-soluble or alkali-soluble latex.

2. Films according to claim 1, characterised in that the coating has a thickness of 1 to 20 µm.

3. Films according to anyone of claims 1 or 2, characterised in that the water-dispersible copolyester containing sulphonyloxy units which is present with the gelatine in the coating intended to receive the printing is chosen from the copolyesters derived from at least one dicarboxylic aromatic acid and from at least one aliphatic diol and comprising a plurality of sulphonyloxy groups of general formula (I) :
-(SO₃)ₙ-M (I)
in which n is equal to 1 or 2, M denotes a hydrogen atom, an alkali or alkaline-earth metal, an ammonium cation or a quaternary ammonium cation.

4. Films according to anyone of claims 1 or 2, characterised in that the latex is chosen from latices of polymers or copolymers based on styrene, acrylic acid, methacrylic acid, alkyl acrylate, especially ethyl or butyl acrylate, alkyl methacrylate, especially ethyl or butyl methacrylate.

5. Films according to anyone of claims 1 to 3, characterised in that the dicarboxylic aromatic acid used to prepare the water-dispersible copolyesters forming part of the composition of the coating intended to receive the printing is chosen from terephthalic, isophthalic, orthophthalic, 1,4-naphtalene dicarboxylic acids and their mixtures and preferably from mixtures of terephthalic acid with one or more other aromatic dicarboxylic acids and more preferably with isophthalic acid.

6. Films according to claim 5, characterised in that the quantity of terephthalic acid, expressed in moles, varies between 20 and 99 % of the total number of moles of non-sulphonated diacids and preferably between 30 and 95 % and in that the water-dispersible copolyester forming part of the composition of the coating intended to receive the printing comprises 5-sodiooxysulphonyl isophthalate units.

7. Films according to anyone of claims 1 to 3, 5 and 6, characterised in that the diol forming part of the composition of the water-dispersible copolyesters containing sulphonyloxy groups is chosen from ethylene glycol, 1,4-butanediol, 1,5-butanediol, 1,3-propanediol, 1,2-propanediol, 2,2-dimethyl-1,3-propanediol (or neopentyl glycol), 1,5-pentanediol, 1,6-hexanediol, diethylene glycol, triethylene glycol, tetraethylene glycol, cyclohexanedimethanol and preferably from ethylene glycol and its oligomers.

8. Films according to anyone of claims 1 to 7, characterised in that in the water-dispersible copolyesters forming part of the composition of the coating intended to receive the printing, the dicarboxylic acid units containing sulphonyloxy units represent from 5 to 30 moles per 100 moles of dicarboxylic acid units and preferably from 8 to 15 moles per 100 moles.

9. Films according to anyone of claims 1 to 8, characterised in that in the coating intended to receive the printing, the weight proportion, calculated as dry solid, of, on the one hand, gelatine to, on the other hand, the water-dispersible copolyester and/or the latex, lies between 40/60 and 98/2 and preferably between 50/50 and 95/5.

10. Films according to anyone of claims 1 to 9, characterised in that, in addition to the gelatine and the copolyester and/or the latex, the coating comprises at least one filler chosen from inorganic or organic solids.

11. Films according to anyone of claims 1 to 10, characterised in that the coating comprises at least one filler chosen from clays like bentonite, sepiolite, and attapulgite, aluminium silicates, talc, commercial talcs which are essentially mixtures of talc and of chlorite, starches, silicas, micas, beads of polymer such as especially polystyrene, polyamides.

12. Films according to anyone of claims 1 to 11, characterised in that in the coating, the filler represents from 0 % to 20 % by weight relative to the dry weight of the gelatine and of the copolyester and/or of the latex, and preferably from 0.5 % to 15 %.

13. Films according to anyone of claims 1 to 12, characterised in that, in addition to the gelatine and the copolyester and/or the latex, the coating comprises other adjuvants improving the adhesion of the coating layer to the substrate film, like borates, preferably alkali metal borates such as sodium tetraborate.

14. Films according to claim 13, characterised in that the coating layer contains from 0.05 to 30 % of borate by weight relative to the weight of the gelatine and of the water-dispersible copolyester and/or of the latex.

15. Films according to anyone of claims 1 to 14, characterised in that, in addition to the gelatine and the copolyester and/or the latex, the coating comprises other adjuvants like optical brighteners, dyes, fungicides and rheological additives.

16. Films according to anyone of claims 1 to 15, characterised in that the polyester substrate film itself is single (A) or composite layer (A) and layer (B) or layer (A) and layer (C) or layer (A) comprising on one face a layer (B) and on the other face a layer (C) and that the total thickness of said substrate film varies from 20 µm to 200 µm and preferably from 50 µm to 150 µm.

17. Process for preparing films according to anyone of claims 1 to 16, characterised in that it consists of coating one face or both faces of the substrate film with the aid of an aqueous solution or dispersion containing the gelatine and the water-dispersible polyester and/or the water-soluble or alkali-soluble latex and preferably of coating only one face of the substrate film.

18. Process according to claim 17, characterised in that the coating is performed out-of-line on the already biaxially drawn substrate film or in-line on the singly drawn substrate film.

19. Process according anyone of claims 17 or 18, characterised in that the aqueous solution or dispersion includes from 1 % to 50 % by weight of gelatine and from 1 % to 50 % of water-dispersible polyester or latex and, if appropriate, a filler, an adhesion adjuvant, an optical brightener, a dye, a fungicide, a rheological additive.

## Patentansprüche

1. Folien, welche für den Tintenstrahldruck verwendbar sind und eine Trägerfolie aus Polyester aufweisen, die auf wenigstens einer ihrer Flächen eine zur Aufnahme des Druckes bestimmte Überzugsschicht besitzt, welcher Überzug ein gelatineartiges Polyamin-Polyacid umfasst, dadurch gekennzeichnet, dass dieser Überzug auch folgendes umfasst:
- einen in Wasser dispergierbaren Copolyester mit Sulfonyloxy-Grundeinheiten und/oder einen wasserlöslichen oder alkalilöslichen Latex.

2. Folien nach Anspruch 1, dadurch gekennzeichnet, dass der Überzug eine Dicke von 1 bis 20 Mikrometern besitzt.

3. Folien nach Anspruch 1 oder 2, dadurch gekennzeichnet, dass der im Überzug zusammen mit der Gelatine vorhandene in Wasser dispergierbare Copolyester mit Sulfonyloxy-Grundeinheiten, welcher dazu bestimmt ist, den Druck aufzunehmen, unter den Copolyestern ausgewählt ist, welche von wenigstens einer aromatischen Dicarbonsäure und mindestens einem aliphatischen Diol abgeleitet sind und eine Vielzahl von Sulfonyloxy-Gruppen der allgemeinen Formel (I) aufweisen:
-(SO₃-)ₙM (I)
in welcher n gleich 1 oder 2 ist und M ein Wasserstoffatom, ein Alkali- oder Erdalkalimetall, ein Ammoniumkation oder ein quateres Ammoniumkation bedeutet.

4. Folien nach einem der Ansprüche 1 oder 2, dadurch gekennzeichnet, dass der Latex unter den Latices von Polymeren oder Copolymeren auf Basis von Styrol, Acrylsäure, Methacrylsäure, Alkylacrylat, insbesondere Ethylacrylat oder Butylacrylat, Alkylmethacrylat, insbesondere Ethylmethacrylat oder Butylmethacrylat, ausgewählt ist.

5. Folien nach einem der Ansprüche 1 bis 3, dadurch gekennzeichnet, dass die aromatische Dicarbonsäure, welche dazu dient, die in Wasser dispergierbaren, in die Zusammensetzung des für die Aufnahme des Druckes bestimmten Überzuges eingebrachten Copolyester herzustellen, unter den Terephthal-, Isophthal-, Orthophthal- und der Naphthalin-Dicarbon-1,4-Säuren und ihren Mischungen, und vorzugsweise unter den Mischungen der Terephthalsäure mit einer oder mehreren anderen aromatischen Dicarbonsäuren, und insbesondere mit der Isophthalsäure, ausgewählt ist.

6. Folien nach Anspruch 5, dadurch gekennzeichnet, dass die Menge an Terephthalsäure, ausgedrückt in Mol, zwischen 20 und 99 % der Gesamtzahl Mole an nicht sulfonierten Diaciden, und vorzugsweise zwischen 30 und 95 % variiert, und dass der in Wasser dispergierbare, in die Zusammensetzung des für die Aufnahme des Druckes bestimmten Überzuges eingebrachte Copolyester Grundeinheiten von Natrium-Oxysulfonyl-5-Isophthalat aufweist.

7. Folien nach einem der Ansprüche 1 bis 3, 5 und 6, dadurch gekennzeichnet, dass das in die Zusammensetzung der in Wasser dispergierbaren Copolyester mit Sulfonyloxy-Gruppen eingebrachte Diol unter Ethylenglykol, Butandiol-1,4, Butandiol-1,5, d Propandiol-1,3, Propandiol-1,2, Dimethyl-2,2-Propandiol-1,3 (oder Neopentylglykol), Pentandiol-1,5, Hexandiol-1,6, Diethylenglykol, Triethylenglykol, Tetraethylenglykol und dem Cyclohexan-Dimethanol, vorzugsweise unter Ethylenglykol und seinen Oligomeren, ausgewählt ist.

8. Folien nach einem der Ansprüche 1 bis 7, dadurch gekennzeichnet, dass in den in Wasser dispergierbaren, in die Zusammensetzung des für die Aufnahme des Druckes bestimmten Überzuges eingebrachten Copolyestern die Grundeinheiten von Dicarbonsäuren mit Sulfonyloxy-Grundeinheiten 5 bis 30 Mol pro 100 Mol der Grundeinheiten von Dicarbonsäuren darstellen, und vorzugsweise 8 bis 15 Mol pro 100 Mol.

9. Folien nach einem der Ansprüche 1 bis 8, dadurch gekennzeichnet, dass in dem für die Aufnahme des Druckes bestimmten Überzug das als trockene Feststoffe berechnete Gewichtsverhältnis zwischen einerseits der Gelatine und andererseits dem in Wasser dispergierbaren Copolyester und/oder dem Latex zwischen 40/60 und 98/2, und bevorzugt zwischen 50/50 und 95/5, liegt.

10. Folien nach einem der Ansprüche 1 bis 9, dadurch gekennzeichnet, dass der Überzug, zusätzlich zur Gelatine und dem Copolyester und/oder dem Latex, mindestens einen Füllstoff aufweist, der unter mineralischen oder organischen Feststoffen ausgewählt ist.

11. Folien nach einem der Ansprüche 1 bis 10, dadurch gekennzeichnet, dass der Überzug mindestens einen aus Tonen, wie Bentonit, Sepiolit und Actapulgit, Aluminiumsilikaten, Talken, handelsüblichen Talken, welche im wesentlichen eine Mischung von Talk und Chlorit sind, Stärken, Kieselerden, Glimmern, Polymerkügelchen, wie insbesondere Polystyrol oder Polyamiden, ausgewählten Füllstoff aufweist.

12. Folien nach einem der Ansprüche 1 bis 11, dadurch gekennzeichnet, dass der Füllstoff in dem Überzug 0 bis 20 Gewichts-% bezogen auf das Trockengewicht der Gelatine und des Copolyesters und/oder des Latex darstellt, vorzugsweise von 0,5 bis 15 Gewichts-%.

13. Folien nach einem der Ansprüche 1 bis 12, dadurch gekennzeichnet, dass der Überzug, zusätzlich zur Gelatine und dem Copolyester und/oder dem Latex, noch andere Hilfsstoffe aufweist, die das Anhatten der Überzugsschicht auf der Trägerfolie verbessern, wie Borate, vorzugsweise Alkalimetallborate, zum Beispiel Natriumtetraborat.

14. Folien nach Anspruch 13, dadurch gekennzeichnet, dass die Überzugsschicht 0,05 bis 30 Gewichts-% Borat bezogen auf das Gewicht der Gelatine und des in Wasser dispergierbaren Copolyesters und/oder des Latex enthält.

15. Folien nach einem der Ansprüche 1 bis 14, dadurch gekennzeichnet, dass der Übetrug, zusätzlich zur Gelatine und dem Copolyester und/oder dem Latex, noch andere Hilfssfoffe aufweist, wie Blaumittel, Farbstoffe, Fungizide oder rheologische Additive, aufweist.

16. Folien nach einem der Ansprüche 1 bis 15, dadurch gekennzeichnet, dass die Polyester-Trägerfolie selbst einfach (A) oder aus einer Lage (A) und einer Lage (B) zusammengesetzt ist, oder aus einer Lage (A) und einer Lage (C) oder aus einer Lage (A), die auf einer Fläche eine Lage (B) und auf der anderen Fläche eine Lage (C) trägt, und dass die Gesamtstärke der Trägerfolie von 20µm bis 200µm, vorzugsweise von 50µm bis 150µm, variiert.

17. Verfahren zum Herstellen von Folien nach einem der Ansprüche 1 bis 16, dadurch gekennzeichnet, dass es im Beschichten einer Fläche oder beider Flächen der Trägerfolie mittels einer Lösung oder einer wässrigen Dispersion besteht, welche die Gelatine und den in Wasser dispergierbaren Polyester und/oder den in Wasser oder einem Alkali löslichen Latex enthält, vorzugsweise im Beschichten einer einzigen Fläche der Trägerfolie.

18. Verfahren nach Anspruch 17, dadurch gekennzeichnet, dass die Beschichtung in einer Nachbehandlung an der bereits zweifach gestreckten Trägerfolie erfolgt oder in der Linie an der einfach gestreckten Trägerfolie.

19. Verfahren nach einem der Ansprüche 17 oder 18, dadurch gekennzeichnet, dass die Lösung oder die wässrige Dispersion 1 bis 50 Gewichts-% Gelatine und 1 bis 50 Gewichts-% in Wasser dispergierbaren Polyesters oder Latex aufweist und gegebenenfalls einen Füllstoff, einen Haftvermittler, ein Blaumittel, einen Farbstoff, ein Fungizid, ein rheologisches Additiv.
